# EUROPEAN PATENT APPLICATION

(11) **EP 4 841 738 A1**
(43) Date of publication of application: **18.11.2026**
(21) Application number: 24918341.9
(22) Date of filing: 25.12.2024
(51) Int. Cl.: H01M 10/0567, H01M 10/0525

(54) **SECONDARY BATTERY AND ELECTRIC DEVICE**

(30) Priority: 17.01.2024 CN 202410069759
(71) Applicant: Contemporary Amperex Technology Co., Limited, Ningde, Fujian 352100 (CN)
(72) Inventor: ZHANG, Cuiping, Ningde, Fujian 352100 (CN); HAN, Changlong, Ningde, Fujian 352100 (CN); JIANG, Bin, Ningde, Fujian 352100 (CN); WU, Zeli, Ningde, Fujian 352100 (CN); HUANG, Lei, Ningde, Fujian 352100 (CN); GUO, Jie, Ningde, Fujian 352100 (CN); FAN, Peng, Ningde, Fujian 352100 (CN)
(74) Representative: Gong, Jinping
(86) International application number: PCT/CN2024/142061
(87) International publication number: WO 2025/152733

(57) **Abstract**

Provided in the present application are a secondary battery and an electric device. An electrolyte of the secondary battery comprises a first additive having a structure as represented by formula I and a second additive comprising at least one of an alkali metal salt of difluorophosphoric acid, an alkali metal salt of tetrafluoroboric acid, an alkali metal salt of fluorosulfonic acid and an alkali metal salt of difluoro oxalato boric acid, wherein the mass content W2 of the second additive in the electrolyte is 0.01% ≤ W2% ≤ 5%; and the ratio of the mass content W2 of the second additive in the electrolyte to the mass content W1 of the first additive in the electrolyte is 0.02 ≤ W2/W1 ≤ 10. The secondary battery has a good cathode-anode interface membrane, thereby having excellent cycle performance and storage performance.

## Description

### CROSS-REFERENCE TO RELATED APPLICATIONS

The present application claims priority to Chinese Patent Application No. 202410069759.9 filed on January 17, 2024 and entitled "SECONDARY BATTERY AND ELECTRIC APPARATUS", which is incorporated herein by reference in its entirety.

### TECHNICAL FIELD

The present application relates to the technical field of secondary batteries, and particularly to a secondary battery and an electric apparatus.

### BACKGROUND

Secondary batteries have attracted much attention due to characteristics such as high specific energy, long cycle life, low self-discharge, and good safety performance. Applications of secondary batteries have penetrated into various aspects of daily life, such as cameras, notebook computers, and electric vehicles, and requirements for power performance, cycle life, and storage life of batteries are also increasingly improved.

During the cycling process, side reactions occur between the electrolyte and active ions at the cathode and anode interfaces, leading to decomposition of the electrolyte, precipitation of active ions, or the like, which reduces the cycle life and storage life of the secondary battery. Therefore, it is necessary to develop a secondary battery having good cycle life and storage life.

### SUMMARY

A first aspect of the present application provides a secondary battery, having both good cycle life and storage life.

The secondary battery provided in this first aspect includes an electrolyte, and the electrolyte includes: a first additive having a structure shown in Formula I, 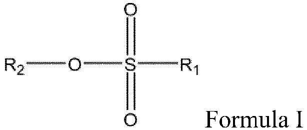
where R₁ is selected from substituted or unsubstituted C3-C6 alkynyl, and R₂ is selected from substituted or unsubstituted C1-C6 alkyl; and
a second additive including at least one of an alkali metal salt of difluorophosphoric acid, an alkali metal salt of tetrafluoroboric acid, an alkali metal salt of fluorosulfonic acid, and an alkali metal salt of difluorooxalatoborate;
where a mass percentage W2 of the second additive in the electrolyte satisfies 0.01% ≤ W2 % ≤ 5%; and
a ratio of the mass percentage W2 of the second additive in the electrolyte to a mass percentage W1 of the first additive in the electrolyte satisfies 0.02 ≤ W2/W1 ≤ 10.

In the secondary battery, the first additive can effectively form a film on the anode of the secondary battery and participate in the formation of the "solid electrolyte interface (solid electrolyte interface, SEI) film", which can effectively inhibit the decomposition of the electrolyte on the anode side. The second additive can preferentially undergo a reduction reaction on the anode side of the secondary battery, participate in forming an SEI film rich in LiF, and inhibit the reduction reaction of the first additive on the anode side and the increase in anode interface impedance. The second additive can also participate in cathode interface film formation, protect the cathode, and inhibit the dissolution of transition metals or doping elements in the positive electrode active material. The combined use of the first additive and the second additive can form good interface films on the cathode and anode, reduce side reactions in the electrolyte of the secondary battery, and improve the cycling performance and storage performance of the secondary battery.

In any embodiment, R₁ is ethynylmethyl, R₂ is methyl or ethyl, and the ethynylmethyl in the first additive helps to react on the anode, generate organic substances, and better participate in the formation of the anode interface film.

In any embodiment, the mass percentage W2 of the second additive in the electrolyte satisfies 0.05% ≤ W2 % ≤ 5%, whereby good interface films can be further formed on the cathode and anode, side reactions on the anode side of the secondary battery can be reduced, and the increase in anode interface impedance can be inhibited.

In any embodiment, the ratio of the mass percentage W2 of the second additive in the electrolyte to the mass percentage W1 of the first additive in the electrolyte satisfies 1 ≤ W2/W1 ≤ 9.5, which can effectively inhibit the deterioration of the anode interface impedance by the first additive, thereby improving the cycling performance and storage performance of the secondary battery.

In any embodiment, the mass percentage W1 of the first additive in the electrolyte satisfies 0.01% ≤ W1 % ≤ 6.5%, and optionally 0.01% ≤ W1 % ≤ 0.1%, whereby the first additive can form a good interface film on the anode side and reduce the increase in anode interface film impedance.

In any embodiment, the alkali metal salt includes any one or a combination of lithium, sodium, potassium, rubidium, and cesium salts, optionally lithium salts.

In any embodiment, the secondary battery includes a positive electrode active material, and the positive electrode active material includes a doping element, the doping element including one or more of B, Zr, Ti, Li, Cr, Cu, Zn, Mg, and Al. The doping element helps to improve the structural stability of the positive electrode active material during the cycling process.

In any embodiment, a mass percentage W3 of the doping element in the positive electrode active material satisfies 0.01% ≤ W3 % ≤ 1%, and optionally 0.04% ≤ W3 % ≤ 1%, whereby the structural stability of the positive electrode active material in the secondary battery can be improved, and the structural phase change of the positive electrode active material caused by deintercalation of active lithium ions during charging and discharging can be inhibited.

In any embodiment, the secondary battery satisfies: 0.1 ≤ W1/W3 ≤ 13; and/or 0.1 ≤ W2/W3 ≤ 35. Controlling the ratio of W1/W3 helps to control the increase in anode interface impedance and improve the structural stability of the positive electrode active material during the cycling process. Controlling the ratio of W2/W3 helps to inhibit the dissolution of doping element ions in the positive electrode active material, improve the structural stability of the positive electrode active material during the cycling process, and reduce the impact of the anode interface film on the active ion transport performance.

In any embodiment, the positive electrode active material includes a lithium nickel cobalt manganese oxide having a molecular formula of Li[NiₓCo_{y}Mn_{z}M_{1-x-y-z}]O₂, where M includes one or more of B, Zr, Ti, Li, Cr, Cu, Zn, Mg, and Al, 0 ≤ x < 1, 0 ≤ y ≤ 1, 0 ≤ z ≤ 1, and x + y + z ≤ 1.

In any embodiment, the electrolytic salt in the electrolyte includes LiPF₆ and lithium bis(fluorosulfonyl)imide, a concentration C1 of LiPF₆ and a concentration C2 of the lithium bis(fluorosulfonyl)imide satisfy: 0.8 M ≤ C1 + C2 ≤ 1.5 M, and 0.1 M ≤ C2 ≤ 1 M. The electrolytic salt has good chemical stability and ionic conductivity, and the combined use of the two can improve the conductivity of the electrolyte and reduce the risk of aluminum foil corrosion.

In any embodiment, the electrolyte includes a solvent containing a cyclic carbonate and/or a linear carboxylic acid ester, and the cyclic carbonate includes at least one of an ethylene carbonate, a fluoroethylene carbonate, and a propylene carbonate; and the linear carboxylic acid ester includes at least one of a dimethyl carbonate, an ethyl methyl carbonate, a diethyl carbonate, an ethyl acetate, a methyl acetate, a methyl propionate, an ethyl propionate, and a propyl propionate. The solvent helps to reduce the viscosity of the electrolyte, and improve the transport performance of active ions, thereby improving the cycling performance of the secondary battery.

A second aspect of the present application provides an electric apparatus including the secondary battery selected from the first aspect of the present application.

### BRIEF DESCRIPTION OF DRAWINGS

FIG. 1 is a schematic diagram of a secondary battery according to an embodiment of the present application.
FIG. 2 is an exploded view of the secondary battery shown in FIG. 1 according to an embodiment of the present application.
FIG. 3 is a schematic diagram of a battery module according to an embodiment of the present application.
FIG. 4 is a schematic diagram of a battery pack according to an embodiment of the present application.
FIG. 5 is an exploded view of the battery pack shown in FIG. 4 according to an embodiment of the present application.
FIG. 6 is a schematic diagram of an electric apparatus using a secondary battery according to an embodiment of the present application as a power source.

Description of reference numerals in the drawings:
1. battery pack; 2. upper box body; 3. lower box body; 4. battery module; 5. secondary battery; 51. housing; 52. electrode assembly; and 53. cover plate.

### DESCRIPTION OF EMBODIMENTS

Hereinafter, embodiments of a secondary battery, a battery module, a battery pack, and an electric apparatus specifically disclosed in the present application will be described in detail with appropriate reference to the accompanying drawings. However, there may be cases where unnecessary detailed descriptions are omitted. For example, there may be omissions of detailed descriptions of well-known matters and repeated descriptions of actually identical structures. This is to avoid unnecessarily lengthening the following descriptions and to facilitate understanding by those skilled in the art. In addition, the accompanying drawings and the following descriptions are provided to enable those skilled in the art to fully understand the present application and are not intended to limit the subject matter described in the claims.

The "range" disclosed in the present application is defined in the form of a lower limit and an upper limit, the given range is defined by selecting a lower limit and an upper limit, and the selected lower limit and upper limit define the boundaries of a specific range. The range defined in this manner may include or exclude endpoints, and any combinations thereof may be made, that is, any lower limit may be combined with any upper limit to form a range. For example, if ranges of 60 to 120 and 80 to 110 are listed for a specific parameter, it is also contemplated that ranges of 60 to 110 and 80 to 120 are understood. In addition, if the minimum range values listed are 1 and 2 and the maximum range values listed are 3, 4, and 5, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any real number combination between a and b, where a and b are both real numbers. For example, the numerical range "0 to 5" means that all real numbers between "0 to 5" have been fully listed herein, and "0 to 5" is merely an abbreviated representation of these numerical combinations. In addition, when a certain parameter is expressed as an integer greater than or equal to 2, it is equivalent to disclosing that the parameter is, for example, the integer 2, 3, 4, 5, 6, 7, 8, 9, 10, 11, or 12.

Unless otherwise specified, all embodiments and optional embodiments of the present application can be combined with each other to form a new technical solution.

Unless otherwise specified, all technical features and optional technical features of the present application can be combined with each other to form a new technical solution.

Unless otherwise specified, all steps in the present application can be performed sequentially or randomly, preferably sequentially. For example, the method includes steps (a) and (b), indicating that the method may include steps (a) and (b) performed sequentially, or may include steps (b) and (a) performed sequentially. For example, the mentioned method may further include step (c), indicating that step (c) can be added to the method in any order, for example, the method may include steps (a), (b), and (c), or may include steps (a), (c), and (b), or may include steps (c), (a), and (b).

Unless otherwise specified, the terms "include" and "comprise" mentioned in the present application indicate open-ended, and may also be closed-ended. For example, the "include" and "comprise" may indicate that other components not listed may also be included or comprised, or only the listed components may be included or comprised.

Unless otherwise specified, in the present application, the term "or" is inclusive. For example, the phrase "A or B" means "A, B, or both A and B". More specifically, any of the following conditions satisfies the condition "A or B": A is true (or present) and B is false (or absent); A is false (or absent) and B is true (or present); or both A and B are true (or present).

### [Secondary battery]

Typically, a secondary battery includes a positive electrode plate, a negative electrode plate, an electrolyte, and a separator. During the charging and discharging process of the battery, active ions shuttle between the positive electrode plate and the negative electrode plate by intercalation and deintercalation. The electrolyte plays a role in conducting ions between the positive electrode plate and the negative electrode plate. The separator is provided between the positive electrode plate and the negative electrode plate, mainly to prevent short circuit between the positive and negative electrodes, and also allows ions to pass through.

The electrolyte includes a solvent, an electrolytic salt, and an additive, and is a carrier for transporting active ions, playing a crucial role in the fast charging performance, specific capacity, cycling efficiency, and safety performance of the secondary battery.

During the first charging and discharging process of the secondary battery, the electrode material and the electrolyte react at the solid-liquid interface to form a passivation layer (also called an interface film) covering the surface of the electrode material. The passivation layer formed on the anode side is called the "solid electrolyte interface film", abbreviated as the SEI film, and the passivation layer formed on the cathode side is called the "cathode electrolyte interphase (cathode electrolyte interphase) film", abbreviated as the CEI film. During the cycling process, the solvent in the electrolyte undergoes side reactions at the phase interface between the electrode and the electrolyte, generating gas, which affects the stability of the electrode interface and the impedance of the interface film, thereby reducing the cycling performance and storage performance of the secondary battery.

Based on this, the present application provides a secondary battery including an additive, and the additive helps the secondary battery to form a good SEI film and/or CEI film, can reduce gas production in the electrolyte, and improve the stability of the electrode interface and the impedance of the interface film.

The secondary battery provided in the present application includes an electrolyte, the electrolyte including: a first additive having a structure shown in Formula I, 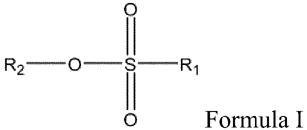
where R₁ is selected from substituted or unsubstituted C3-C6 alkynyl, and R₂ is selected from substituted or unsubstituted C1-C6 alkyl; and
a second additive including an alkali metal salt of difluorophosphoric acid, an alkali metal salt of tetrafluoroboric acid, an alkali metal salt of fluorosulfonic acid, and an alkali metal salt of difluorooxalatoborate, where a mass percentage W2 of the second additive in the electrolyte satisfies 0.01% ≤ W2 % ≤ 5%; and
a ratio of the mass percentage W2 of the second additive in the electrolyte to a mass percentage W1 of the first additive in the electrolyte satisfies 0.02 ≤ W2/W1 ≤ 10.

Herein, "C1-C6 alkyl" refers to a linear or branched hydrocarbon chain group consisting only of carbon and hydrogen atoms, with no unsaturation in the group, having from one to six carbon atoms, and attached to the rest of the molecule via a single bond. In some embodiments, the C1-C6 alkyl includes any one of methyl, ethyl, n-propyl, isopropyl, n-butyl, n-pentyl, and optionally, the C1-C6 alkyl is selected from methyl and ethyl.

Herein, "C3-C6 alkynyl" refers to an alkyl having 3 to 6 carbon atoms and containing at least one alkynyl group. The C3-C6 alkynyl includes any one of CH≡C-CH₂- (ethynylmethyl), CH≡C-CH₂-CH₂-, CH≡C-C≡C-CH₂-, and optionally, the C3-C6 alkynyl is selected from ethynylmethyl.

Herein, the term "substituted" refers to substitution by a substituent, where the substituents are each independently selected from: halogen atoms and C1-C6 alkyl, for example, fluoro substitution.

In the secondary battery, the unsaturated alkenyl group in the first additive can undergo a reduction reaction on the anode of the secondary battery to generate loose organic substances participating in the formation of the SEI film, but is not conducive to reducing the interface impedance of the SEI film. The second additive can preferentially deposit on the anode of the secondary battery, preferentially undergo a reduction reaction during formation, and participate in forming a dense SEI film rich in LiF. The SEI film helps to reduce the reduction reaction of the first additive on the anode and inhibit the increase in anode interface impedance. The second additive can also participate in cathode interface film formation, protect the cathode, and inhibit the dissolution of transition metals or doping elements in the positive electrode active material. The combined use of the first additive and the second additive helps to obtain an SEI film having both rigidity and toughness, inhibits the increase in anode interface impedance and the reductive decomposition of the electrolyte on the anode, and improves the cycling performance and storage performance of the secondary battery.

In some embodiments, R₁ is ethynylmethyl, and R₂ is methyl or ethyl. In some embodiments, R₁ is ethynylmethyl, and R₂ is methyl. In some embodiments, R₁ is ethynylmethyl, and R₂ is ethyl. The unsaturated group contained in the first additive can react on the anode and better participate in the formation of the SEI film; and the R₂ group has good chemical stability and structural toughness, which helps to improve the electronic insulation of the SEI film and the flexibility of the interface film.

In some embodiments, the mass percentage W2 of the second additive in the electrolyte satisfies 0.05% ≤ W2 % ≤ 5%. In some embodiments, the mass percentage W2 of the second additive in the electrolyte satisfies 0.1% ≤ W2 % ≤ 2.5%, 0.05% ≤ W2 % ≤ 3.0%, 0.2% ≤ W2 % ≤ 2.5%, 0.1% ≤ W2 % ≤ 5.0%, 0.3% ≤ W2 % ≤ 2.5%, or 0.75% ≤ W2 % ≤ 5.0%. In some embodiments, the mass percentage W2 of the second additive in the electrolyte is 0.05%, 0.07%, 0.1%, 0.15%, 0.2%, 0.25%, 0.5%, 0.75%, 1%, 1.5%, 1.85%, 2%, 2.5%, 2.95%, 3%, 3.5%, 4%, 4.5%, 5%, or in a range between any two of these values. Controlling the mass percentage of the second additive in the electrolyte allows it to form good interface films on the anode and cathode, and helps to inhibit the reduction reaction of the first additive on the anode side of the secondary battery and the increase in anode interface impedance.

In some embodiments, the ratio of the mass percentage W2 of the second additive in the electrolyte to the mass percentage W1 of the first additive in the electrolyte satisfies 1 ≤ W2/W1 ≤ 10. In some embodiments, the ratio of the mass percentage W2 of the second additive in the electrolyte to the mass percentage W1 of the first additive in the electrolyte satisfies 1 ≤ W2/W1 ≤ 9.5. In some embodiments, the ratio of the mass percentage W2 of the second additive in the electrolyte to the mass percentage W1 of the first additive in the electrolyte satisfies 1 ≤ W2/W1 ≤ 7.5, 2 ≤ W2/W1 ≤ 10, 3 ≤ W2/W1 ≤ 10, 1 ≤ W2/W1 ≤ 9, 1 ≤ W2/W1 ≤ 8, or 3.5 ≤ W2/W1 ≤ 7. In some embodiments, the ratio of the mass percentage W2 of the second additive in the electrolyte to the mass percentage W1 of the first additive in the electrolyte is 1, 1.3, 1.5, 1.8, 2, 2.4, 3, 3.5, 3.7, 4, 5, 6, 7.5, 8.7, 9.2, 9.8 or in a range between any two of these values. When the ratio of the mass percentage W2 of the second additive in the electrolyte to the mass percentage W1 of the first additive in the electrolyte is too small, the first additive can deteriorate the anode interface impedance of the secondary battery, which is not conducive to the cycling performance of the secondary battery. When the ratio of the mass percentage W2 of the second additive in the electrolyte to the mass percentage W1 of the first additive in the electrolyte is too high, the second additive can deteriorate the conductivity of the electrolyte, which is not conducive to the migration of active ions and affects the cycling performance of the secondary battery. Controlling the ratio of the mass percentage W2 of the second additive in the electrolyte to the mass percentage W1 of the first additive in the electrolyte can balance the anode interface impedance of the secondary battery and the conductivity of the electrolyte, improving the cycling performance and storage performance of the secondary battery.

In some embodiments, the mass percentage W1 of the first additive in the electrolyte satisfies 0.01% ≤ W1 % ≤ 6.5%. In some embodiments, the mass percentage W1 of the first additive in the electrolyte satisfies 0.01% ≤ W1 % ≤ 0.1%, 0.05% ≤ W1 % ≤ 5%, 0.01% ≤ W1 % ≤ 4%, 0.01% ≤ W1 % ≤ 3%, or 0.01% ≤ W1 % ≤ 1%. In some embodiments, the mass percentage W1 of the first additive in the electrolyte is 0.03%, 0.08%, 0.1%, 0.5%, 0.8%, 1.2%, 2.3%, 3.4%, 4.1%, 4.9%, 5.5%, 6.3% or in a range between any two of these values. Adjusting the mass percentage of the first additive in the electrolyte helps it to form a good interface film on the anode side, reduce side reactions on the anode side, and not excessively increase the anode interface impedance.

In some embodiments, in the secondary battery, the mass percentage W1 of the first additive in the electrolyte satisfies 0.01% ≤ W1 % ≤ 1%, the mass percentage W2 of the second additive in the electrolyte satisfies 0.1% ≤ W2 % ≤ 5%, and the ratio of W2 to W1 satisfies 1 ≤ W2/W1 ≤ 10, which can further improve the cycling performance and storage performance of the secondary battery.

In some embodiments, the alkali metal salt includes any one or a combination of lithium, sodium, potassium, rubidium, and cesium salts, and in some embodiments, the alkali metal salt includes a lithium salt.

In some embodiments, the second additive includes lithium difluorophosphate and/or lithium tetrafluoroborate. In some embodiments, the second additive includes lithium difluorophosphate. In some embodiments, the second additive includes lithium tetrafluoroborate. The additives are widely available and cost-controllable, helping to form high-quality cathode and anode interface films.

In some embodiments, the secondary battery includes a positive electrode active material, and the positive electrode active material may adopt a positive electrode active material for batteries well known in the art.

As an example, the positive electrode active material may also include at least one of the following materials: lithium-containing phosphates with olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of the lithium transition metal oxides may include, but are not limited to, at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.85}Co_{0.15}Al_{0.05}O₂)), and their modified compounds. Examples of lithium-containing phosphates with olivine structure may include, but are not limited to, at least one of lithium iron phosphate (such as LiFePO₄ (also abbreviated as LFP)), lithium iron phosphate composite with carbon, lithium manganese phosphate (such as LiMnPO₄), lithium manganese phosphate composite with carbon, lithium manganese iron phosphate, and lithium manganese iron phosphate composite with carbon.

In some embodiments, the positive electrode active material includes a doping element. In some embodiments, the doping element includes one or more of B, Zr, Ti, Li, Cr, Cu, Zn, Mg, and Al, and the doping element helps to improve the structural stability of the positive electrode active material during the cycling process. In some embodiments, the doping element includes Zr.

In some embodiments, the positive electrode active material includes a lithium nickel cobalt manganese oxide having a molecular formula of Li[NiₓCo_{y}Mn_{z}M_{1-x-y-z}]O₂, where the doping element M includes one or more of B, Zr, Ti, Li, Cr, Cu, Zn, Mg, and Al, 0 ≤ x < 1, 0 ≤ y ≤ 1, 0 ≤ z ≤ 1, and x + y + z ≤ 1.

In some embodiments, 0 < x < 1, 0 ≤ y ≤ 0.3, 0 ≤ z ≤ 0.01, and x + y + z ≤ 1.

In some embodiments, the lithium nickel cobalt manganese oxide having a molecular formula of Li[NiₓCo_{y}Mn_{z}M_{1-x-y-z}]O₂ can be prepared using methods known in the prior art, for example, referring to the methods or partial methods in CN117334860A, CN117334852A, CN115986105A for preparation.

In some embodiments, a mass percentage W3 of the doping element in the positive electrode active material satisfies 0.01% ≤ W3 % ≤ 1%. In some embodiments, the secondary battery includes a positive electrode active material containing a doping element, and the mass percentage W3 of the doping element in the positive electrode active material satisfies 0.04% ≤ W3 % ≤ 1%, 0.1% ≤ W3 % ≤ 1%, 0.05% ≤ W3 % ≤ 0.9%, 0.05% ≤ W3 % ≤ 0.8%, 0.05% ≤ W3 % ≤ 0.7%, 0.2% ≤ W3 % ≤ 1%, and 0.01% ≤ W3 % ≤ 0.5%. The secondary battery includes a positive electrode active material containing a doping element, and the mass percentage W3 of the doping element in the positive electrode active material is 0.03%, 0.05%, 0.08%, 0.1%, 0.15%, 0.2%, 0.25%, 0.3%, 0.38%, 0.41%, 0.52%, 0.64%, 0.72%, 0.83%, 0.94% or in a range between any two of these values. The doping element can improve the crystal stability of the positive electrode active material. Adjusting the percentage of the doping element in the positive electrode active material can inhibit the structural phase change of the positive electrode active material caused by deintercalation of active ions during charging and discharging, improve the structural stability of the positive electrode active material during cycling, and reduce the impact of the doping element on the energy density of the secondary battery, thereby improving the cycling performance and storage performance of the secondary battery.

The mass percentage W3 of the doping element in the positive electrode active material can be measured using methods known in the art. As an example, it can be determined by inductively coupled plasma (ICP) spectroscopy analysis, for example, using an inductively coupled plasma emission spectrometer, or referring to standards YS/T1006.2-2014, GB/T23367.2-2009, or YS/T1028.5-2015.

In some embodiments, in the secondary battery, the mass percentage W1 of the first additive in the electrolyte satisfies 0.01% ≤ W1 % ≤ 1%, the mass percentage W2 of the second additive in the electrolyte satisfies 0.05% ≤ W2 % ≤ 5%, and the mass percentage W3 of the doping element in the positive electrode active material satisfies 0.02% ≤ W3 % ≤ 1%, which can simultaneously balance the cycling performance and storage performance of the secondary battery.

In some embodiments, the secondary battery satisfies: 0.1 ≤ W1/W3 ≤ 13. In some embodiments, the ratio of the mass percentage W1 of the first additive in the electrolyte to the mass percentage W3 of the doping element in the positive electrode active material is 0.5 to 13, 0.8 to 13, 1 to 13, 2 to 13, 3 to 13, 0.1 to 10, 0.1 to 7, 0.1 to 6.7, 0.1 to 5, or 0.1 to 3. In some embodiments, the ratio of the mass percentage W1 of the first additive in the electrolyte to the mass percentage W3 of the doping element in the positive electrode active material is 0.3, 0.7, 1, 1.3, 2, 2.7, 3, 3.8, 4, 4.3, 5, 5.7, 6, 6.3, 7, 7.8, 8, 8.8, 9, 9.4, 10, 11, 11.4, 12.1, 13 or in a range between any two of these values. Adjusting the ratio of W1/W3 helps to control the increase in anode interface impedance and improve the structural stability of the positive electrode active material during the cycling process, helping to improve the cycling performance and storage performance of the secondary battery.

In some embodiments, the secondary battery satisfies: 0.1 ≤ W2/W3 ≤ 35. In some embodiments, the ratio of W2/W3 is 1 to 35, 0.5 to 35, 1 to 30, 2 to 25, 3 to 20, 0.1 to 33, 0.3 to 27, or 0.7 to 30. In some embodiments, the ratio of W2/W3 is 0.15, 0.55, 0.96, 1.7, 2.5, 3.5, 5.3, 8.7, 10.2, 13.4, 15, 17.6, 18.9, 21.5, 23.1, 24.8, 28.9, 34.5 or in a range between any two of these values. Adjusting the ratio of W2/W3 helps to inhibit the dissolution of doping element ions in the positive electrode active material, improve the structural stability of the positive electrode active material during the cycling process, and reduce the impact of the anode interface film on the active ion transport performance.

### [Positive electrode plate]

The positive electrode plate includes a positive electrode current collector and a positive electrode film layer provided on at least one surface of the positive electrode current collector, and the positive electrode film layer includes a positive electrode active material.

As an example, the positive electrode current collector has two opposite surfaces in its own thickness direction, and the positive electrode film layer is provided on either or both of the two opposite surfaces of the positive electrode current collector.

In some embodiments, the positive electrode current collector may adopt a metal foil or a composite current collector. For example, as the metal foil, aluminum foil may be adopted. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated propylene acrylate resin.

In some embodiments, the positive electrode film layer optionally further includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared in the following manner: the above components for preparing the positive electrode plate, such as the positive electrode active material, conductive agent, binder, and any other components, are dispersed in a solvent (such as N-methylpyrrolidone) to form a positive electrode slurry. The positive electrode slurry is applied to the positive electrode current collector, and after drying, cold pressing, and other processes, the positive electrode plate is obtained.

### [Negative electrode plate]

The negative electrode plate includes a negative electrode current collector and a negative electrode film layer provided on at least one surface of the negative electrode current collector, and the negative electrode film layer includes a negative electrode active material.

As an example, the negative electrode current collector has two opposite surfaces in its own thickness direction, and the negative electrode film layer is provided on either or both of the two opposite surfaces of the negative electrode current collector.

In some embodiments, the negative electrode current collector may adopt a metal foil or a composite current collector. For example, as the metal foil, copper foil may be adopted. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode active material may adopt a negative electrode active material for batteries well known in the art. As an example, the negative electrode active material may include at least one of the following materials: artificial graphite, natural graphite, soft carbon, hard carbon, silicon-based materials, tin-based materials, and lithium titanate. The silicon-based material is optionally selected from at least one of elemental silicon, silicon oxide, silicon-carbon composite, silicon-nitrogen composite, and silicon alloy. The tin-based material is optionally selected from at least one of elemental tin, tin oxide, and tin alloy. However, the present application is not limited to these materials, and other conventional materials that can be used as negative electrode active materials for batteries may also be used. These negative electrode active materials may be used alone or in combination of two or more.

In some embodiments, the negative electrode film layer optionally further includes a binder. The binder is optionally selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. The conductive agent is optionally selected from at least one of superconducting carbon, acetylene black, carbon black, Ketjen black, carbon dots, carbon nanotubes, graphene, and carbon nanofibers.

In some embodiments, the negative electrode film layer optionally further includes other auxiliaries, such as a thickener (such as sodium carboxymethyl cellulose (CMC-Na)).

In some embodiments, the negative electrode plate can be prepared in the following manner: the above components for preparing the negative electrode plate, such as the negative electrode active material, conductive agent, binder, and any other components, are dispersed in a solvent (such as deionized water) to form a negative electrode slurry. The negative electrode slurry is applied to the negative electrode current collector, and after drying, cold pressing, and other processes, the negative electrode plate is obtained.

### [Electrolyte]

The electrolyte plays a role in conducting ions between the positive electrode plate and the negative electrode plate. The present application has no specific limitation on the type of the electrolyte, which can be selected according to needs. For example, the electrolyte can be liquid, gel, or all-solid-state.

In some embodiments, the electrolyte adopts a liquid electrolyte. The liquid electrolyte includes an electrolytic salt and a solvent.

In some embodiments, the electrolytic salt is optionally selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the electrolytic salt in the liquid electrolyte includes lithium hexafluorophosphate and lithium bis(fluorosulfonyl)imide, and the electrolytic salt has good chemical stability and provides active ions for the electrolyte, helping to improve the rate performance and cycling performance of the secondary battery.

In some embodiments, a concentration C1 of the lithium hexafluorophosphate (LiPF₆) and a concentration C2 of the lithium bis(fluorosulfonyl)imide (LiFSI) satisfy: 0.8 M ≤ C1 + C2 ≤ 1.5 M, and 0.1 M ≤ C2 ≤ 1 M. LiFSI has a high dissociation degree in the electrolyte, which can significantly improve the conductivity of the electrolyte and increase the lithium ion transport rate, but LiFSI has a risk of corroding aluminum foil; while LiPF₆ can form a dense passivation layer on the surface of the aluminum foil to inhibit aluminum foil corrosion, and the combined use of the two can improve the conductivity of the electrolyte and reduce the risk of aluminum foil corrosion.

In some embodiments, the solvent of the electrolyte includes a solvent containing a cyclic carbonate and/or a linear carboxylic acid ester, and the cyclic carbonate includes at least one of an ethylene carbonate, a fluoroethylene carbonate, and a propylene carbonate; and the linear carboxylic acid ester includes at least one of a dimethyl carbonate, an ethyl methyl carbonate, a diethyl carbonate, an ethyl acetate, a methyl acetate, a methyl propionate, an ethyl propionate, and a propyl propionate. The solvent helps to reduce the viscosity of the electrolyte, and improve the transport performance of active ions, thereby improving the cycling performance of the secondary battery.

### [Separator]

In some embodiments, the secondary battery further includes a separator. The present application has no particular limitation on the type of the separator, and any well-known porous structure separator having good chemical stability and mechanical stability can be selected.

In some embodiments, the material of the separator is optionally selected from at least one of glass fiber, non-woven fabric, polyethylene, polypropylene, and polyvinylidene fluoride. The separator can be a single-layer film or a multi-layer composite film, with no particular limitation. When the separator is a multi-layer composite film, the materials of various layers can be the same or different, with no particular limitation.

In some embodiments, the positive electrode plate, the negative electrode plate, and the separator can be made into an electrode assembly through a winding process or a lamination process.

In some embodiments, the secondary battery may include an outer package. The outer package can be used to encapsulate the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic include polypropylene, polybutylene terephthalate, and polybutylene succinate.

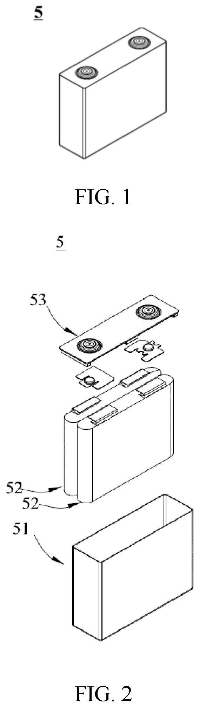

The present application has no particular limitation on the shape of the secondary battery, which can be cylindrical, prismatic, or any other shape. For example, FIG. 1 shows a secondary battery 5 having a prismatic structure as an example.

In some embodiments, referring to FIG. 2, the outer package may include a housing 51 and a cover plate 53. The housing 51 may include a bottom plate and a side plate connected to the bottom plate, and the bottom plate and the side plate enclose an accommodating cavity. The housing 51 has an opening in communication with the accommodating cavity, and the cover plate 53 can cover the opening to close the accommodating cavity. The positive electrode plate, the negative electrode plate, and the separator can form an electrode assembly 52 through a winding process or a lamination process. The electrode assembly 52 is encapsulated in the accommodating cavity. The electrolyte is infiltrated into the electrode assembly 52. The number of electrode assemblies 52 contained in the secondary battery 5 can be one or more, and those skilled in the art can select the number according to specific actual needs.

In some embodiments, the secondary battery can be assembled into a battery module, the number of secondary batteries contained in the battery module can be one or more, and the specific number can be selected by those skilled in the art according to the application and capacity of the battery module.

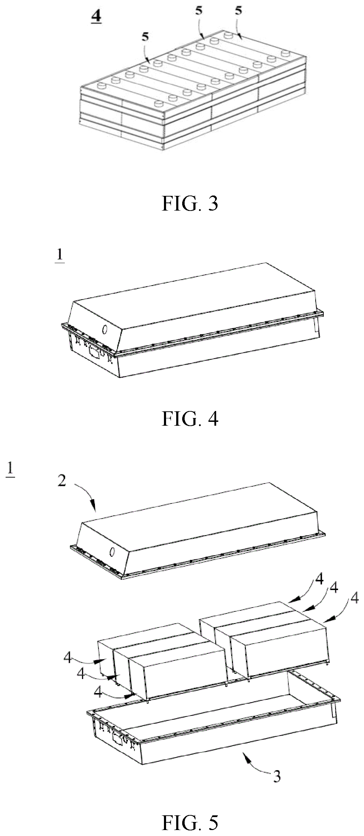

FIG. 3 shows a battery module 4 as an example. Referring to FIG. 3, in the battery module 4, a plurality of secondary batteries 5 can be arranged in sequence along the length direction of the battery module 4. Certainly, they can also be arranged in any other manner. Further, the plurality of secondary batteries 5 can be fixed by fasteners.

Optionally, the battery module 4 may further include an outer shell having an accommodating space, and the plurality of secondary batteries 5 are accommodated in the accommodating space.

In some embodiments, the above battery module can also be assembled into a battery pack, the number of battery modules contained in the battery pack can be one or more, and the specific number can be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 provided in the battery box. The battery box includes an upper box body 2 and a lower box body 3, and the upper box body 2 can cover the lower box body 3 and form a closed space for accommodating the battery modules 4. The plurality of battery modules 4 can be arranged in the battery box in any manner.

In addition, the present application also provides an electric apparatus, the electric apparatus including at least one of the secondary battery, the battery module, or the battery pack provided in the present application. The secondary battery, the battery module, or the battery pack can be used as a power source of the electric apparatus or as an energy storage unit of the electric apparatus. The electric apparatus may include mobile devices (such as mobile phones or notebook computers), electric vehicles (such as pure electric vehicles, hybrid electric vehicles, plug-in hybrid electric vehicles, electric bicycles, electric scooters, electric golf carts, or electric trucks), electric trains, ships, satellites, and energy storage systems, but is not limited thereto.

As the electric apparatus, the secondary battery, the battery module, or the battery pack can be selected according to its usage needs.

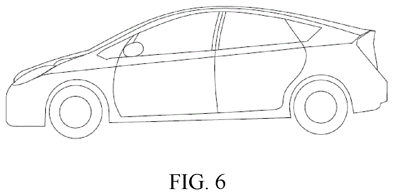

FIG. 6 shows an electric apparatus as an example. The electric apparatus is a pure electric vehicle, hybrid electric vehicle, plug-in hybrid electric vehicle, or the like. To meet the high power and high energy density requirements of the secondary battery for the electric apparatus, a battery pack or battery module can be adopted.

As another example of the apparatus, it can be a mobile phone, tablet computer, notebook computer, or the like. Such apparatus usually requires lightweight and thin design, and a secondary battery can be adopted as a power source.

### Examples

Hereinafter, examples of the present application will be described. The examples described below are exemplary and are only used to explain the present application, and should not be understood as limiting the present application. For specific techniques or conditions not specified in the examples, they are carried out according to the techniques or conditions described in the literature in the art or according to the product instructions. Reagents or instruments used without specifying the manufacturer are all conventional products that can be purchased commercially.

### I. Test methods

### 1. Cycling performance test of secondary battery

At an ambient temperature of 25°C, the cell was charged at 1C to 4.25 V, constant voltage charged to 0.05C, left standing for 10 min, and discharged at 1C to 2.8 V, and the discharge capacity was recorded as C0. 300 cycles were performed according to the above charging and discharging process, the discharge capacity of the 300th cycle was C1, and the cycle capacity retention rate of the cell = C1/C0 × 100%.

### 2. Storage performance test of secondary battery

The cell was charged at 1C to 4.25 V, constant voltage charged to 0.05 C, left standing for 5 min, and discharged at 1C to 2.8 V, and the discharge capacity D0 was recorded. The cell was stored at 60°C for 60 days, and the cell was taken out and restored to 25°C. Then, the cell was discharged at 1C to 2.8 V, left standing for 2 hours, charged at 1C to 4.25 V, constant voltage charged to 0.05 C, left standing for 2 h, and then discharged at 1C to 2.8 V, and the discharge capacity was recorded as D1. The discharge capacity retention rate = D1/D0 × 100%.

### 3. Determination of percentage of doping element in positive electrode active material

An inductively coupled plasma emission spectrometer was used, referring to the standard YS/T1006.2-2014 for measurement.

### II. Preparation of secondary battery

### Example 1

### (1) Preparation of electrolyte

In a glove box filled with argon (with a water content less than 10 ppm, and an oxygen content less than 1 ppm), ethylene carbonate (EC) and ethyl methyl carbonate (EMC) were mixed in a volume ratio of 3:7 to obtain a non-aqueous organic solvent, and dried lithium salts LiPF₆ and lithium bis(fluorosulfonyl)imide were dissolved in the mixed organic solvent to make the concentrations of lithium salt LiPF₆ and lithium bis(fluorosulfonyl)imide in the prepared electrolyte 0.8 mol/L and 0.2 mol/L respectively. To the above solution, a first additive (having a structural formula of 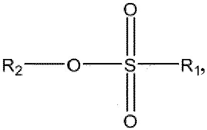 R₁ being ethynylmethyl, and R₂ being methyl) with a mass percentage W1 (based on the total mass of the electrolyte) of 0.05% and a second additive lithium tetrafluoroborate with a mass percentage W2 of 0.05% were added.

### (2) Preparation of positive electrode plate

The positive electrode active material Li[Ni_{0.8}Co_{0.1}Mn_{0.098}Zr_{0.002}]O₂, conductive agent Super P, and binder polyvinylidene fluoride were mixed in a mass ratio of 8:1:1, and N-methylpyrrolidone (NMP) was added and stirred well to obtain a positive electrode slurry with a solid content of 50wt%. The positive electrode slurry was applied to the current collector aluminum foil, and after drying, cold pressing, and slitting, the positive electrode plate was obtained.

### (3) Preparation of negative electrode plate

The negative electrode active material graphite, conductive agent Super P, thickener sodium carboxymethyl cellulose, and binder styrene-butadiene rubber were mixed well in a mass ratio of 80:15:3:2 in deionized water to prepare a negative electrode slurry with a solid content of 30wt%. The negative electrode slurry was applied to the current collector copper foil, and after drying, pressing, edge trimming, slitting, and stripping, the negative electrode plate was made.

### (4) Preparation of secondary battery

A polyethylene film (PE) with a thickness of 16 µm was used as the separator. The prepared positive electrode plate, the separator, and the negative electrode plate were stacked in order, with the separator placed in the middle of the positive and negative electrode plates to play the role of isolating the positive and negative electrodes, and wound to obtain the electrode assembly, the tabs were welded, the electrode assembly was placed in the outer package, the above-prepared electrolyte was injected into the dried cell, and after packaging, standing, formation, shaping, capacity testing, or the like, the lithium-ion battery of Example 1 was obtained.

### Examples 2 to 19 and Comparative Examples 1 and 2

The secondary batteries of Examples 2 to 18 and secondary batteries of Comparative Examples 1 and 2 were made using the preparation method similar to that for the secondary battery of Example 1, but the amounts of additives and the mass percentage of doping elements in the positive electrode active material were adjusted, as detailed in Table 1.

Example 19 was similar to Example 1 in the preparation method of the secondary battery, with the difference in that: the substituent R₁ of the first additive was vinyl, R₂ was ethyl, and the mass percentage was 0.10%; and the second additive was lithium difluorophosphate, with a mass percentage of 0.10%, as detailed in Table 1.

**Table 1**

| No. | W1 | W2 | Positive electrode active material | W3 |
|---|---|---|---|---|
| Example 1 | 0.05% | 0.05% | Li[Ni_{0.8}Co_{0.1}Mn_{0.098}Zr_{0.002}]O₂ | 0.20% |
| Example 2 | 0.10% | 0.05% | Li[Ni_{0.8}Co_{0.1}Mn_{0.0967}Zr_{0.0033}]O₂ | 0.33% |
| Example 3 | 0.10% | 0.50% | Li[Ni_{0.8}Co_{0.1}Mn_{0.0996}Zr_{0.0004}]O₂ | 0.04% |
| Example 4 | 0.10% | 0.75% | Li[Ni_{0.8}Co_{0.1}Mn_{0.0995}Zr_{0.0005}]O₂ | 0.05% |
| Example 5 | 0.01% | 0.10% | Li[Ni_{0.8}Co_{0.1}Mn_{0.0999}Zr_{0.0001}]O₂ | 0.01% |
| Example 6 | 0.50% | 0.01% | Li[Ni_{0.8}Co_{0.1}Mn_{0.099}Zr_{0.001}]O₂ | 0.10% |
| Example 7 | 0.50% | 1.00% | Li[Ni_{0.8}Co_{0.1}Mn_{0.097}Zr_{0.003}]O₂ | 0.30% |
| Example 8 | 0.50% | 3.00% | Li[Ni_{0.8}Co_{0.1}Mn_{0.095}Zr_{0.005}]O₂ | 0.50% |
| Example 9 | 0.50% | 5.00% | Li[Ni_{0.8}Co_{0.1}Mn_{0.09}Zr_{0.01}]O₂ | 1.00% |
| Example 10 | 0.50% | 2.50% | Li[Ni_{0.8}Co_{0.1}Mn_{0.095}Zr_{0.005}]O₂ | 0.50% |
| Example 11 | 1.00% | 2.50% | Li[Ni_{0.8}Co_{0.1}Mn_{0.095}Zr_{0.005}]O₂ | 0.50% |
| Example 12 | 3.00% | 2.50% | Li[Ni_{0.8}Co_{0.1}Mn_{0.095}Zr_{0.005}]O₂ | 0.50% |
| Example 13 | 5.00% | 2.50% | Li[Ni_{0.8}Co_{0.1}Mn_{0.095}Zr_{0.005}]O₂ | 0.50% |
| Example 14 | 6.50% | 2.50% | Li[Ni_{0.8}Co_{0.1}Mn_{0.095}Zr_{0.005}]O₂ | 0.50% |
| Example 15 | 0.10% | 0.50% | Li[Ni_{0.8}Co_{0.1}Mn_{0.09}Zr_{0.01}]O₂ | 1.00% |
| Example 16 | 0.10% | 0.50% | Li[N_{i0.8}Co_{0.1}Mn_{0.098}Zr_{0.002}]O₂ | 0.20% |
| Example 17 | 0.10% | 0.50% | Li[Ni_{0.8}Co_{0.1}Mn_{0.0998}Zr_{0.0002}]O₂ | 0.02% |
| Example 18 | 0.10% | 0.50% | Li[Ni_{0.8}Co_{0.1}Mn_{0.09985}Zr_{0.00015}]O₂ | 0.015% |
| Example 19 | 0.10% | 0.10% | Li[Ni_{0.8}Co_{0.1}Mn_{0.0998}Zr_{0.0002}]O₂ | 0.02% |
| Comparative Example 1 | 0.01% | 0.11% | Li[Ni_{0.8}Co_{0.1}Mn_{0.0998}Zr_{0.0002}]O₂ | 0.02% |
| Comparative Example 2 | 1.00% | 6.00% | Li[Ni_{0.8}Co_{0.1}Mn_{0.096}Zr_{0.004}]O₂ | 0.40% |

The secondary batteries prepared in Examples 1 to 19 and Comparative Examples 1 and 2 were tested using the above methods, and the test results are shown in Table 2 below:

**Table 2**

| No. | W2/W1 | W1/W3 | W2/W3 | Cycling performance | Storage performance |
|---|---|---|---|---|---|
| Example 1 | 1.0 | 0.3 | 0.3 | 96.50% | 94.20% |
| Example 2 | 0.5 | 0.3 | 0.2 | 96.20% | 94.00% |
| Example 3 | 5.0 | 2.5 | 12.5 | 98.90% | 97.40% |
| Example 4 | 7.5 | 2.0 | 15.0 | 98.70% | 97.20% |
| Example 5 | 10.0 | 1.0 | 10.0 | 98.60% | 96.90% |
| Example 6 | 0.02 | 5.00 | 0.1 | 92.30% | 91.10% |
| Example 7 | 2.0 | 1.67 | 3.3 | 97.10% | 96.10% |
| Example 8 | 6.0 | 1.00 | 6.0 | 96.80% | 95.70% |
| Example 9 | 10.0 | 0.50 | 5.0 | 96.40% | 97.00% |
| Example 10 | 5.0 | 1.00 | 5.0 | 96.70% | 97.40% |
| Example 11 | 2.5 | 2.00 | 5.0 | 96.60% | 97.50% |
| Example 12 | 0.8 | 6.00 | 5.0 | 91.20% | 90.40% |
| Example 13 | 0.5 | 10.00 | 5.0 | 90.80% | 89.70% |
| Example 14 | 0.4 | 13.00 | 5.0 | 90.10% | 89.40% |
| Example 15 | 5.0 | 0.10 | 0.5 | 96.00% | 93.80% |
| Example 16 | 5.0 | 0.50 | 2.5 | 96.60% | 95.10% |
| Example 17 | 5.0 | 5.00 | 25.0 | 96.30% | 94.90% |
| Example 18 | 5.0 | 6.67 | 33.3 | 90.10% | 89.50% |
| Example 19 | 1.0 | 5 | 5.0 | 95.40% | 93.50% |
| Comparative Example 1 | 11.0 | 0.5 | 5.5 | 86.00% | 85.70% |
| Comparative Example 2 | 6.0 | 2.5 | 15.0 | 87.40% | 87.20% |

From Examples 1 to 19 and Comparative Examples 1 and 2, it can be seen that when the mass percentage of the second additive is 0.01% to 5%, and the ratio of the mass percentage W2 of the second additive to the mass percentage W1 of the first additive is in the range of 0.02 to 10, good interface films can be formed on both the cathode and anode of the secondary battery, making the secondary battery have both good cycling performance and storage performance.

From Examples 1 to 5, it can be seen that when the ratio of W2 to W1 is in the range of 1 to 10, the deterioration of the anode interface impedance of the secondary battery can be further improved, thereby further improving the cycling performance and storage performance of the secondary battery.

From Examples 6 to 10, it can be seen that when the mass percentage W2 of the second additive is in the range of 0.01% to 5.00%, the second additive can participate in interface film formation on the cathode and anode, and inhibit the deterioration of the anode interface impedance and the structural stability of the positive electrode active material, thereby improving the cycling performance and storage performance of the secondary battery. When the mass percentage W2 of the second additive is in the range of 1.00% to 5.00%, the cycling performance and storage performance of the secondary battery can be further improved.

From Examples 10 to 14, it can be seen that when the mass percentage of the first additive is in the range of 0.5% to 6.5%, the secondary battery has good cycling performance and storage performance. At the same time, it is shown that as the mass percentage of the first additive increases, the deteriorating effect of the first additive on the anode interface impedance increases, leading to a decrease in the improving effect of the first additive on the cycling performance and storage performance of the secondary battery. When the mass percentage of the first additive is in the range of 0.50% to 1.0%, the cycling performance and storage performance of the secondary battery can be significantly improved.

From Example 6 and Examples 15 to 18, it can be seen that when the mass percentage of the doping element in the positive electrode active material is in the range of 0.01% to 1.00%, the structural stability of the positive electrode active material is improved, and the secondary battery has good cycling performance and storage performance. When the mass percentage of the doping element in the positive electrode active material is in the range of 0.02% to 1.00%, the cycling performance and storage performance of the secondary battery can be further improved.

From Example 19, it can be seen that when the first additive containing an alkynyl group has R₂ selected from ethyl, and the second additive is lithium difluorophosphate, the prepared secondary battery also has excellent cycling performance and storage performance.

It should be noted that the present application is not limited to the above embodiments. The above embodiments are merely examples, and any embodiments having substantially the same configuration as the technical idea and exerting the same effects within the scope of the technical solution of the present application are included in the technical scope of the present application. In addition, various modifications conceivable by those skilled in the art, and other forms constructed by combining some constituent elements of the embodiments, are also included in the scope of the present application without departing from the gist of the present application.

## Claims

1. A secondary battery, **characterized by** comprising an electrolyte, wherein the electrolyte comprises: a first additive having a structure shown in Formula I, 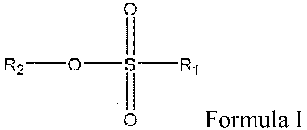
wherein R₁ is selected from substituted or unsubstituted C3-C6 alkynyl, and R₂ is selected from substituted or unsubstituted C1-C6 alkyl; and
a second additive comprising at least one of an alkali metal salt of difluorophosphoric acid, an alkali metal salt of tetrafluoroboric acid, an alkali metal salt of fluorosulfonic acid, and an alkali metal salt of difluorooxalatoborate;
wherein a mass percentage W2 of the second additive in the electrolyte satisfies 0.01% ≤ W2 % ≤ 5%; and
a ratio of the mass percentage W2 of the second additive in the electrolyte to a mass percentage W1 of the first additive in the electrolyte satisfies 0.02 ≤ W2/W1 ≤ 10.

2. The secondary battery according to claim 1, **characterized in that** R₁ is ethynylmethyl, and R₂ is methyl or ethyl.

3. The secondary battery according to claim 1 or 2, **characterized in that** the mass percentage W2 of the second additive in the electrolyte satisfies 0.05% ≤ W2 % ≤ 5%.

4. The secondary battery according to any one of claims 1 to 3, **characterized in that** the ratio of the mass percentage W2 of the second additive in the electrolyte to the mass percentage W1 of the first additive in the electrolyte satisfies 1 ≤ W2/W1 ≤ 9.5.

5. The secondary battery according to any one of claims 1 to 4, **characterized in that** the mass percentage W1 of the first additive in the electrolyte satisfies 0.01% ≤ W1 % ≤ 6.5%, and optionally 0.01% ≤ W1 % ≤ 1%.

6. The secondary battery according to any one of claims 1 to 5, **characterized in that** the alkali metal salt comprises any one or a combination of lithium, sodium, potassium, rubidium, and cesium salts, optionally lithium salts.

7. The secondary battery according to any one of claims 1 to 6, **characterized in that** the secondary battery comprises a positive electrode active material, the positive electrode active material comprises a doping element, and the doping element comprises one or more of B, Zr, Ti, Li, Cr, Cu, Zn, Mg, and Al.

8. The secondary battery according to claim 7, **characterized in that** a mass percentage W3 of the doping element in the positive electrode active material satisfies 0.01% ≤ W3 % ≤ 1%, and optionally 0.04% ≤ W3 % ≤ 1%.

9. The secondary battery according to claim 7 or 8, **characterized in that** the secondary battery satisfies: 0.1 ≤ W1/W3 ≤ 13; and/or 0.1 ≤ W2/W3 ≤ 35.

10. The secondary battery according to claim 7 or 8, **characterized in that** the positive electrode active material comprises a lithium nickel cobalt manganese oxide having a molecular formula of Li[NiₓCo_{y}Mn_{z}M_{1-x-y-z}]O₂, wherein M comprises one or more of B, Zr, Ti, Li, Cr, Cu, Zn, Mg, and Al, 0 ≤ x < 1, 0 ≤ y ≤ 1, 0 ≤ z ≤ 1, and x + y + z ≤ 1.

11. The secondary battery according to any one of claims 1 to 10, **characterized in that** the electrolytic salt in the electrolyte comprises LiPF₆ and lithium bis(fluorosulfonyl)imide, a concentration C1 of the LiPF₆ and a concentration C2 of the lithium bis(fluorosulfonyl)imide satisfy: 0.8 M ≤ C1 + C2 ≤ 1.5 M, and 0.1 M ≤ C2 ≤ 1 M.

12. The secondary battery according to any one of claims 1 to 11, **characterized in that** the electrolyte comprises a solvent containing a cyclic carbonate and/or a linear carboxylic acid ester;
the cyclic carbonate comprises at least one of an ethylene carbonate, a fluoroethylene carbonate, and a propylene carbonate; and
the linear carboxylic acid ester comprises at least one of a dimethyl carbonate, an ethyl methyl carbonate, a diethyl carbonate, an ethyl acetate, a methyl acetate, a methyl propionate, an ethyl propionate, and a propyl propionate.

13. An electric apparatus, **characterized by** comprising the secondary battery according to any one of claims 1 to 12.
